# EUROPEAN PATENT APPLICATION

(11) **EP 2 333 650 A2**
(43) Date of publication of application: **15.06.2011**
(21) Application number: 10167562.7
(22) Date of filing: 28.06.2010
(51) Int. Cl.: G06F 3/048

(54) **Displaying device and control method thereof and display system and control method thereof**

(30) Priority: 14.12.2009 KR 20090124197
(71) Applicant: SAMSUNG ELECTRONICS CO., LTD., Suwon-si Gyeonggi-do 442-742 (KR)
(72) Inventor: Noh, Chang-soo, Gyeonggi-do (KR); Kim, Eung-nan, Gyeonggi-do (KR); Moon, Jong-bo, Gyeonggi-do (KR)
(74) Representative: Brandon, Paul Laurence

(57) **Abstract**

Disclosed are a display device and a control method thereof, and a display system and a control method, the display device including: a signal processor which processes an image signal; a display unit which displays on a screen an image based on the image signal processed by the signal processor; and a controller which receives an input from at least one touch pad mapped to the screen of the display unit and displays a shape of the pointer corresponding to a touch state of the touch pad.

## Description

### BACKGROUND

### Field

Apparatuses and methods consistent with the present invention relate to a display device and a control method thereof and a display system and a control method thereof, and more particularly, to a display device and a control method thereof, and a display system and a control method thereof which displays various shapes of pointers.

### Description of the Related Art

A touch pad is an input device which is a small flat panel with a capacitance sensor. If a user touches a touch pad with his/her finger or a pen in a display device, a curser moves by a pressure of the touch and the display device recognizes location information. The touch pad includes a plurality of layers including a layer directly touched by a user, a circuit layer, etc.

With the recent development of a wireless touch pad, a remote controller is mounted with a touch pad. If a user touches a touch pad of the remote controller, a pointer in a predetermined shape is displayed on a screen of the display device, moves along a user's movement and executes a particular content. However, when a user touches the touch pad, a user's finger shape may change according to the location of the touch pad and the shape of the point displayed on the display device may remain the same. Thus, a user may fail to experience a real and/or a three-dimensional effect.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention provides a display device which may include: a signal processor which processes an image signal; a display unit which displays on a screen an image based on the image signal processed by the signal processor; and a controller which receives an input from at least one touch pad mapped to the screen of the display unit and displays a shape of the pointer corresponding to a touch state of the touch pad.

The controller may further display the pointer at a position on the screen corresponding to a location of the touch pad touched by a user.

The display device may further include a signal receiver which receives the image signal.

The touch pad may include a plurality of areas, and the controller may further display different pointers corresponding to the plurality of touched areas of the touch pad.

The controller may receive the input from a remote controller comprising the touch pad.

The pointer may be shaped like a human finger, and the controller may further display the pointer corresponding to a bending of a user's finger.

The display device may further include a signal receiver which receives the image signal.

The controller may further display the pointer in a predetermined shape if a user is adjacent to the touch pad.

The touch state may include at least one of a distance between a user's finger and the touch pad and whether the user's finger is touching the touch pad.

The touch state may be based on a capacitance value.

The capacitance may be based on at least one of a distance of the user's finger from the touch pad and whether the user's finger is touching the touch pad.

Another aspect of the present invention provides display system which may include: a remote controller which includes at least one touch pad; and a display device, including a screen mapped to the touch pad, which receives an input from the remote controller and displays a pointer which is changed in shape corresponding to a touch state of the touch pad.

Another aspect of the present invention provides a control method of a display device, wherein the method may include: receiving an input from at least one touch pad mapped to a screen of the display device; and displaying a a pointer which changes shape corresponding to a touch state of the touch pad.

The method may further include displaying the pointer at a position on the screen corresponding to a location of the touch pad touched by a user.

The method may further include receiving an image signal.

The method may further include displaying the pointer in a predetermined shape if a user is adjacent to the touch pad.

The method may further include displaying the pointer corresponding to a bending of a user's finger.

The touch state may include at least one of a distance between the user's finger and the touch pad and whether the user's finger is touching the touch pad.

The touch state may be based on a capacitance value.

The capacitance may be based on at least one of a distance of the user's finger from the touch pad and whether the user's finger is touching the touch pad.

Another aspect of the present invention provides a control method of a display system including a display device and a remote controller, wherein the method may include: outputting a signal from the remote controller which includes at least one touch pad; receiving, at the display device, the signal output from the remote controller, wherein the display device includes a screen mapped to the touch pad; and displaying a pointer which changes in shape corresponding to a user's touching of the touch pad.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of a display system according to an exemplary embodiment;
FIG. 2 illustrates pointers which are displayed on a screen of a display device according to the exemplary embodiment;
FIG. 3 illustrates pointers which are displayed on a screen of a display device according to another exemplary embodiment;
FIG. 4 is a flowchart of a control process of the display device according to the exemplary embodiment;
FIG. 5 is a flowchart of a control process of the display device according to the another exemplary embodiment;
FIG. 6 is a flowchart of a control process of the display system according to the exemplary embodiment; and
FIG. 7 is a flowchart of a control process of a display system according to another exemplary embodiment.

### DETAILED DESCRIPTION OF EXEMPLARY EMBODIMENTS

Below, exemplary embodiments will be described in detail with reference to accompanying drawings. The exemplary embodiments may be embodied in various forms without being limited to the exemplary embodiments set forth herein. Descriptions of well-known parts are omitted for clarity, and like reference numerals refer to like elements throughout.

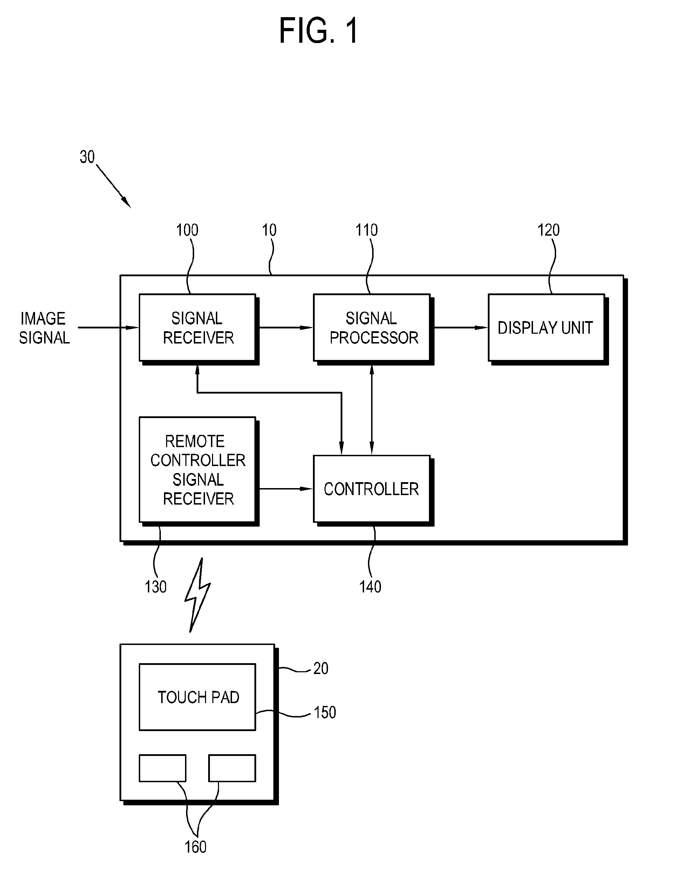

FIG. 1 is a block diagram of a display system 30 according to an exemplary embodiment. As shown therein, the display system 30 according to the present exemplary embodiment may include a display device 10 and a remote controller 20.

The remote controller 20 includes a touch pad 150 and a hard key 160. The remote controller 20 may further include a capacitance sensor (not shown).

The touch pad 150 is mapped in an absolute coordinate in a screen of the display device 10. If the remote controller 20 includes a plurality of touch pads 150, the GUI(graphical user interface) or screen of the display device 10 may be divided as much as the number of the touch pads 150 to be mapped to the touch pads 150. If a user touches the touch pad 150, the remote controller 20 outputs location information on a location touched by a user and a remote controller signal corresponding to a user's click action.

The remote controller may further include a mechanical switch (not shown) to receive the input of the user's click action. The switch may be located under the touch pad 150 and the remote controller may include a plurality of the switches. But the input of the user's click action may be input by pressing the touch pad 150.If the user inputs the click action, the remote controller 20 outputs the remote controller signal corresponding to the user's click action.

The hard key 160 is generally provided in the remote controller 20 and outputs a remote controller signal corresponding to a user's selection of a particular key.

The capacitance sensor extracts a capacitance corresponding to a user touching the touch pad 150 to sense a user's contact.

The display device 10 includes a signal processor 110, a display unit 120, a remote controller signal receiver 130 and a controller 140. The display device 10 may further include a signal receiver 100, a touch pad (not shown) and the capacitance sensor.

The signal processor 110 processes a predetermined image signal to display on the display unit 120 an image based on the image signal. The signal processor 110 may decode, enhance and scale the image signal.

The display unit 120 displays thereon an image based on the image signal processed by the signal processor 110. The display unit 120 may include a liquid crystal display (LCD) to display an image thereon. The display unit 120 may include an LCD panel, a panel driver and a backlight unit. The display unit 120 may display a pointer at a position on a screen corresponding to a location of the touch pad touched by a user.

The remote controller signal receiver 130 receives a remote controller signal corresponding to a user's input. A user may change a channel, adjust volume, or set the environment of the display device 10 through the remote controller 20. The remote controller signal may typically include an infrared signal or other wireless communication signals than the infrared signal. If a user inputs a command through the remote controller 20, the remote controller 20 transmits a remote controller signal corresponding to the user's input, and the remote controller signal receiver 130 transmits the received remote controller signal to the controller 140. If a user uses the touch pad 150 of the remote controller 20, the remote controller 20 outputs location information of a user in the touch pad 150 and a remote controller signal, and the remote controller signal receiver 130 transmits the location information and the remote controller signal to the controller 140.

The controller 140 controls an operation of the display device 10 according to a remote controller signal transmitted by the remote controller signal receiver 130 and controls other elements of the display device 10 as a whole. If a user uses the touch pad, the controller 140 displays a pointer at a particular position on a screen corresponding to a location of the touch pad touched by a user by mapping the screen and the touch pad in an absolute coordinate.

The display device 10 according to the present exemplary embodiment may receive a user's input from a remote controller including the touch pad 150 or from a touch pad (not shown) of the display device 10. If the display device 10 includes a plurality of touch pads, the controller 140 may divide the screen or the GUI, and map the touch pads and the divided screens or the GUI.

The signal receiver 100 receives an image signal. The image signal which is received by the signal receiver 100 includes a broadcasting signal such as a DTV signal and a cable broadcasting signal. In this case, the signal receiver 100 may tune and receive a broadcasting signal of a channel selected by a user according to a control of the controller 140. The image signal which is received by the signal receiver 100 may include a signal output from a video device such as a digital versatile disc (DVD) device and a Blu-ray disk (BD) device. Further, the signal receiver 100 may receive an audio signal to output an audio and a data signal to output data information. The image signal, audio signal and data signal according to the present exemplary embodiment may be received altogether through a single broadcasting signal.

If the signal receiver 100 receives an image signal, the signal processor 110 may perform a demultiplexing operation to divide a broadcasting signal received through the signal receiver 100 into an image signal, an audio signal and a data signal and decode the audio signal and the data signal.

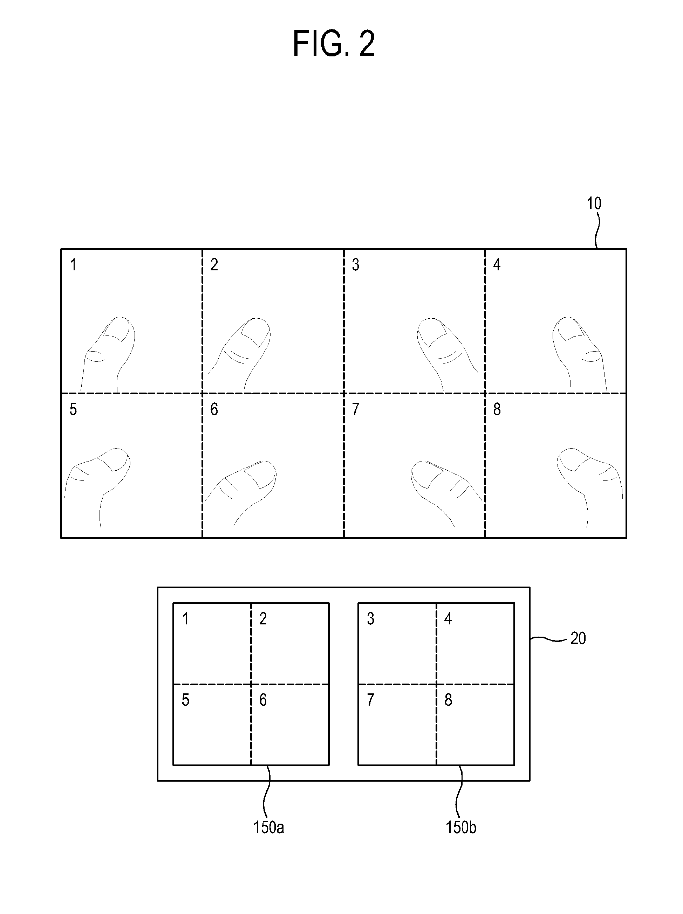

FIG. 2 illustrates pointers which are displayed on the screen of the display device 10 according to an exemplary embodiment. FIG. 2 also illustrates two touch pads 150 of the remote controller 20.

If the remote controller signal receiver 130 receives a remote control signal, the controller 140 determines the number of the touch pads 150 of the remote controller 20. The controller 140 may identify a particular area of the remote controller signal as an area representing the number of the touch pads 150 and determine the number of the touch pads 150.

At the determination of the number of the touch pads 150, the controller 140 divides the screen corresponding to the number of the touch pads 150 and maps the divided screens or the divided GUI with the touch pads 150. If the touch pads 150 include a plurality of areas, the screen or the GUI which is mapped to the touch pads 150 is divided into a plurality of areas. As shown in FIG. 2, if there are two touch pads 150, the screen or the GUI is divided into two to be mapped to a first touch pad 150a and a second touch pad 150b, respectively. If the first and second touch pads 150a and 150b are divided into four areas, respectively, the screens which are mapped to the first and second touch pads 150a and 150b are divided into four areas, respectively. The plurality of areas of the touch pads may include physically separated areas or a physically single area but divided virtually to determine a touch location.

If a user touches the touch pad 150, the bending degree of a user's finger varies depending on the touch location of the touch pad 150. The controller 140 displays a pointer which is changed in shape corresponding to the location of the touch pad 150 touched by a user at a position on the screen corresponding to the touch location of the touch pad 150.

The controller 140 divides the touch pad 150 into a plurality of areas and displays the pointer shaped corresponding to each area of the screen upon a user's touch of the touch pad.

For example, as shown in FIG. 2, the controller 140 divides the first touch pad 150a of the remote controller 20 into four areas, determines the location information on the touch location output by the remote controller 20 upon a user's touch of the touch pad 150 and displays the pointer changing its shape corresponding to the areas on the screen. The pointer may be shaped like a human finger, a paw or a webfoot, for example. However, the present invention is not limited thereto. The shape of the pointers may be similar to the real shapes in consideration of the form of the joint if a user touches an area.

In the same method as the first touch pad 150a, the second touch pad 150b may be divided and display the pointer corresponding to the area. If a pointer is shaped like a human finger, the first touch pad 150a may display a left finger and the second touch pad 150b may display a right finger. If a user wishes to display various pointers, the first and second touch pads 150a and 150b may display various types of pointers.

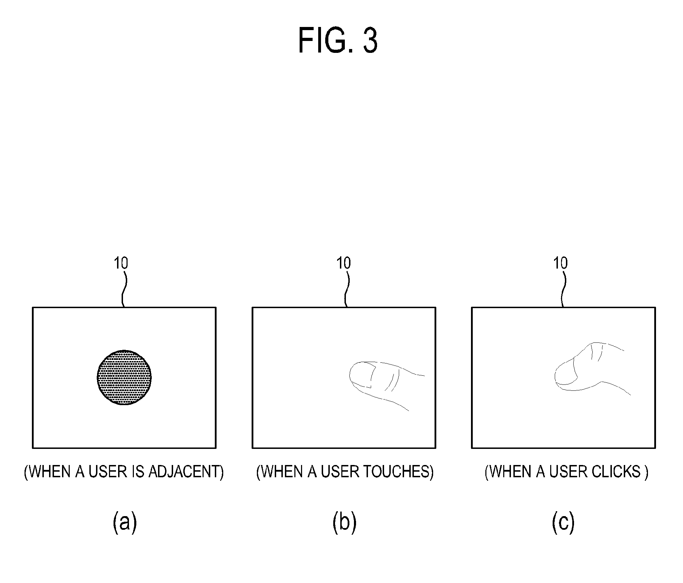

FIG. 3 illustrates pointers which are displayed on a screen of a display device 10 according to another exemplary embodiment. Specifically, FIG. 3 exemplifies a touch pad 150 which is provided in the remote controller 20.

If a user is adjacent to the touch pad 150, a capacitance sensor (not shown) extracts a capacitance value corresponding to a user being adjacent to the touch pad 150 and the remote controller 20 outputs the capacitance value. If the remote controller signal receiver 130 receives the capacitance value, the capacitance value is transmitted to the controller 140. The controller 140 displays a pointer which is changed in shape corresponding to a user's touch state of the touch pad 150 by using the capacitance value.

The capacitance value may range from 0 to 10, for example. If a capacitance value is 0, the controller 140 may determine that a user is far from the touch pad 150. If a capacitance value is 1 to 2, the controller 140 may determine that a user is adjacent to the touch pad 150. If a capacitance value is 3 or more, the controller 140 may determine that a user touches the touch pad 150. If a user clicks the touch pad 150, a remote controller signal is output regardless of the capacitance value. Thus, the controller 140 may determine whether a user clicks the touch pad 150 according to an input of the remote controller signal.

If a user is not adjacent to the touch pad 150, the controller 140 does not display the pointer on the screen. If a user is adjacent to the touch pad 150, the controller 140 displays a pointer in a particular shape on the screen. If a user touches or clicks the touch pad 150, the controller 140 displays a corresponding pointer.

FIG. 3 illustrates pointers which have different shapes depending on when (a) a user is adjacent to the touch pad 150, (b) when a user touches the touch pad 150 and (c) when a user clicks the touch pad 150. If a user is adjacent to the touch pad 150, a pointer in an unclear circular shape is displayed. When a user touches or clicks the touch pad 150, a human finger is displayed on the screen. If a user clicks the touch pad 150, his/her finger may be bent more than when he/she touches it. Thus, the controller 140 reflects the difference in the shape of the pointer to be displayed. It should be noted that the pointer may have various shapes other than a human finger.

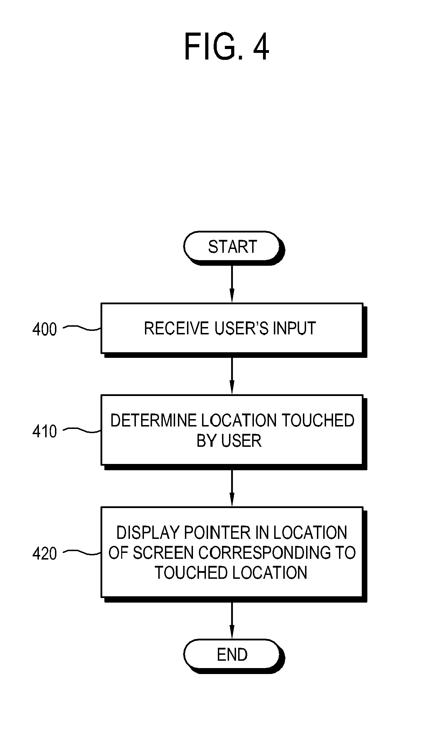

FIG. 4 is a flowchart of a control process of the display device 10 according to an exemplary embodiment.

If the controller 140 receives a user's input from at least one touch pad 150 mapped to the screen of the display device 10 (S400), it determines the location of the touch pad 150 touched by a user (S410). The controller 140 displays the pointer at the position on the screen corresponding to the location touched by a user (S420). The controller 140 may display pointers changed in shape corresponding to the location of the touch pad 150 touched by a user.

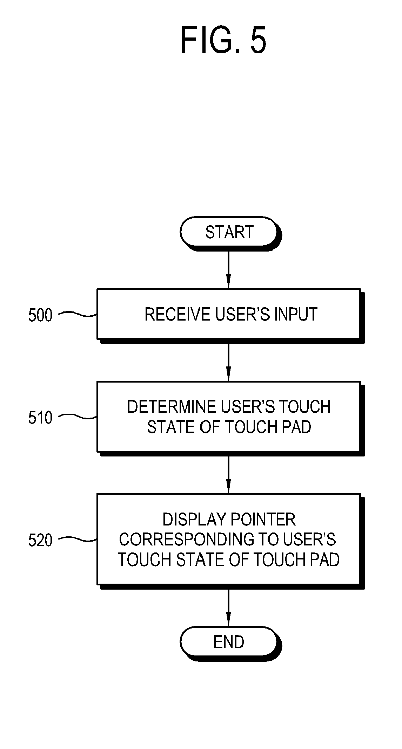

FIG. 5 is a flowchart of a control process of the display device 10 according to another exemplary embodiment.

If the controller 140 receives a user's input from at least one touch pad 150 mapped to the screen of the display device 10 (S500), it determines a user's touch state of the touch pad 150 (S510). The controller 140 displays pointers which are changed in shape corresponding to a user's touch state of the touch pad 150 such as when a user is adjacent or touches or clicks the touch pad 150 (S520).

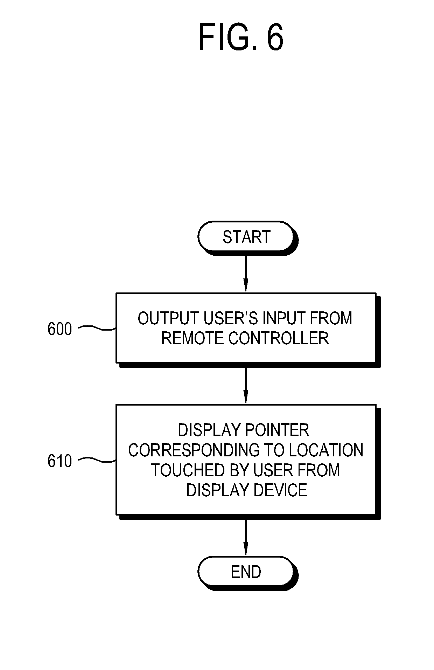

FIG. 6 is a flowchart of a control process of the display system 30 according to an exemplary embodiment.

If a user touches at least one touch pad 150 of the remote controller 20, the remote controller 20 outputs a user's input (S600). The controller 140 receives a user's input from the display device 10 including the screen mapped to the touch pad 150, and displays the pointer at the position on the screen corresponding to the location of the touch pad 150 touched by a user (S610). The controller 140 displays pointers which are changed in shape corresponding to the location of the touch pad 150 touched by a user.

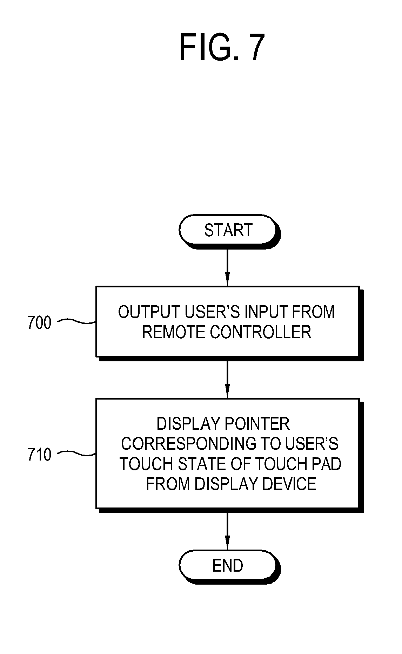

FIG. 7 is a flowchart of a control process of a display device 30 according to another exemplary embodiment.

If a user touches at least one touch pad 150 of the remote controller 20, the remote controller 20 outputs a user's input (S700). The controller 140 receives a user's input from the display device 10 including the screen mapped to the touch pad 150 and displays the pointer which is changed in shape corresponding to a user's touch state of the touch pad 150 (S710).

As described above, a display device and a control method thereof, and a display system and a control method thereof according to the present invention displays on a screen of the display device a pointer which is changed in shape corresponding to a touch location of a touch pad and provides the sense of the real and a three-dimensional effect.

Further, the display device and the control method thereof, and the display system and the control method thereof according to the present invention displays on a screen of the display device a pointer which is changed in shape corresponding to a user's touch state of the touch pad and enables a user to feel the sense of manipulation of the touch pad.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display device comprising:
a signal processor which processes an image signal;
a display unit which displays on a screen an image based on the image signal processed by the signal processor; and
a controller which receives an input from at least one touch pad mapped to the screen of the display unit and displays a shape of the pointer corresponding to a touch state of the touch pad.

2. The display device according to claim 1, wherein the controller further displays the pointer at a position on the screen corresponding to a location of the touch pad touched by a user.

3. The display device according to claim 1, further comprising a signal receiver which receives the image signal.

4. The display device according to claim 1, wherein the touch pad comprises a plurality of areas, and the controller further displays different pointers corresponding to the plurality of touched areas of the touch pad.

5. The display device according to claim 1, wherein the controller receives the input from a remote controller comprising the touch pad.

6. The display device according to claim 1, wherein the pointer is shaped like a human finger, and the controller further displays the pointer corresponding to a bending of a user's finger.

7. The display device according to claim 1, further comprising a signal receiver which receives the image signal.

8. The display device according to claim 1, wherein the controller further displays the pointer in a predetermined shape if a user is adjacent to the touch pad.

9. The display device according to claim 1, wherein the touch state includes at least one of a distance between a user's finger and the touch pad and whether the user's finger is touching the touch pad.

10. The display device according to claim 1, wherein the touch state is based on a capacitance value.

11. The display device according to claim 10, wherein the capacitance is based on at least one of a distance of the user's finger from the touch pad and whether the user's finger is touching the touch pad.

12. A control method of a display device, the method comprising:
receiving an input from at least one touch pad mapped to a screen of the display device; and
displaying a pointer which changes shape corresponding to a touch state of the touch pad.

13. The method according to claim 12, further comprising displaying the pointer at a position on the screen corresponding to a location of the touch pad touched by a user.

14. The method according to claim 12, further comprising displaying the pointer in a predetermined shape if a user is adjacent to the touch pad.

15. The method according to claim 12, further comprising displaying the pointer corresponding to a bending of a user's finger.
